# EUROPEAN PATENT APPLICATION

(11) **EP 2 583 804 A1**
(43) Date of publication of application: **24.04.2013**
(21) Application number: 12185459.0
(22) Date of filing: 21.09.2012
(51) Int. Cl.: B28D 5/00, B23D 57/00

(54) **A new wafer sawing system**

(30) Priority: 22.10.2011 US 201161550389 P
(71) Applicant: Applied Materials Switzerland Sàrl, 1033 Cheseaux-sur-Lausanne (CH)
(72) Inventor: Schmid, Andreas, 3280 Meyriez (CH); Manens Antoine, Saratoga CA 95070 (US); Beau De Lomenie, Romain, 1095 Lutry VD (CH); Fay, Richard, Bluffade UT 84065 (US); Genonceau Franck, Echenevex 01170 (CH)
(74) Representative: Zimmermann & Partner

(57) **Abstract**

A wafer sawing system (100) and a method of sawing an ingot (317) in a wafer sawing system (100) are described. The system includes an ingot input module (102), an ingot output module (110), two or more wire sawing chambers (300)that each comprise: two wire guide cylinders (321, 322), at least one wire (323) disposed across both of the wire guide cylinders (321, 322), a support table (312) that is configured to receive a single ingot (317), and an ingot positioning system (340) that is configured to urge the single ingot (317) disposed on the support table (312) against the at least one wire (323), and a robot (220) that is configured to transfer the single ingot (323) between the ingot input module (102), at least one of the two or more wire sawing chambers (300) and the ingot output chamber (110).

## Description

### FIELD OF THE INVENTION

Embodiments of the invention generally relate to an apparatus and method for forming thin substrates from an ingot. The present invention also relates to a system including a plurality of wire sawing devices that can saw multiple ingots at once to form the thin substrates. The invention is particularly useful for fabrication of thin crystalline silicon solar cell substrates from a formed crystalline ingot.

### DESCRIPTION OF THE RELATED ART

Conventional wire sawing devices generally contain a plurality of the wires that are moved in a single direction relative to an ingot or piece that is to be sawed. Wire sawing devices are generally used in the electronics industry to saw ingots including ferrites, quartz and silica, to obtain thin slices of material, such as polysilicon or monocrystalline silicon, or even new materials such as GaAs, InP, GGG or else quartz, synthetic sapphire, ceramic materials. The high price of the materials renders wire sawing more attractive compared to other techniques such as diamond disc sawing.

In the known devices, the sawing region is constituted by an assembly of multiple cylinders in parallel. These cylinders, called wire guides, are engraved with grooves defining the interval between the wires of the layer, namely the thickness of the slices. The piece to be sawed is fixed on a support which moves perpendicularly to the layer of wires. The speed of movement of the piece defines the cutting speed. Renewal of the wire, as well as control of its tension, takes place in a so-called management region for the wire located beyond the sawing region where the ingots or pieces are cut. The abrasive agent which effects the cutting is either an abrasive fixed on the wire, for example for a diamond wire, or a free abrasive provided in the form of a slip or slurry. The wire acts only as a carrier for the abrasive material. During cutting of the piece to be sawed into thin slices, the tensioned wire is both guided and tensioned by the wire guide cylinders.

For numerous applications, the sawed slices, or also referred herein as wafers, are of a very small thickness relative to the cross-section, or diameter, of the piece to be sawed. The sawed slices thus have a substantial flexibility and can flex and curve to come into contact with adjacent slices. This flexing is undesirable for precision and flatness of cutting and can give rise to undulations, striations and undesirable irregularities on the surface of the sawed slices. These irregularities, even of several micrometers, are enough to render the slices unusable for certain applications, such as silicon for the solar industry and for semiconductors. The deformations of the slices can even lead to micro ruptures and ruptures, especially near the coupling point where the slice are connected to their support.

Wire sawing techniques have gained favor in the process of forming photovoltaic type substrates. Photovoltaics (PV), or solar cells, are devices which convert sunlight into direct current (DC) electrical power. A typical PV cell includes a ptype silicon wafer, substrate, or sheet particularly less than about 0.185 mm thick with a thin layer of an n-type silicon material disposed on top of the p-type substrate. In general, silicon substrate based solar energy technology follows two main strategies to reduce the costs of solar electricity by use of PV solar cells. One approach is increasing the conversion efficiency of single junction devices (i.e., power output per unit area) and the other is lowering costs associated with manufacturing the solar cells. Since the effective cost reduction due to conversion efficiency is limited by fundamental thermodynamic and physical limits, the amount of possible gain depends on basic technological advances, such as aspects of the invention disclosed herein. The other strategy to make commercially viable solar cells lies in reducing the manufacturing costs required to form the solar cells.

In order to meet these challenges, the following solar cell processing requirements generally need to be met: 1) the cost of ownership (CoO) for substrate fabrication equipment needs to be improved (e.g., high system throughput, high machine up-time, inexpensive machines, inexpensive consumable costs), 2) the area processed per process cycle needs to be increased (e.g., reduce processing per Wp) and 3) the quality of the formed layers and film stack formation processes needs to be well controlled and be sufficient to produce highly efficient solar cells. Therefore, there is a need to cost effectively form and manufacture thin silicon substrates for solar cell applications.

Further, as the demand for solar cell devices continues to grow, there is a trend to reduce cost by increasing the substrate throughput, increase the size of the solar cell substrate to increase the amount of power that can be collected during operation of the solar cell, increase the wafer saw system throughput (MWatts/yr), reduce the cost of consumables, and improve the quality of the deposition processes performed on the substrate. To cut down the substrate formation cost, it is desirable to design a novel wafer sawing system and wafer sawing processing sequence that have a high substrate throughput and improved wafer sawing process yield.

### SUMMARY OF THE INVENTION

In light of the above, the wafer sawing system according to independent claim 1, and the method of sawing an ingot in wafer sawing system according to independent claim 8 are provided. Further advantages, features, aspects and details are evident from the dependent claims, the description and the drawings.

The present invention generally provides a wafer sawing system, including an ingot input module, an ingot output module, two or more wire sawing chambers that each include two wire guide cylinders, at least one wire disposed across both of the wire guide cylinders, a support table that is configured to receive a single ingot, and an ingot positioning system that is configured to urge the single ingot disposed on the support table against the at least one wire, and a robot that is configured to transfer the single ingot between the ingot input module, at least one of the two or more wire sawing chambers and the ingot output chamber.

Embodiments of the invention may further provide a method of sawing an ingot in a wafer sawing system, including transferring a single ingot from an input module to one of a plurality of wire sawing chambers that are positioned relative to a transferring region of a transfer chamber, sawing the single ingot in the wire sawing chamber, wherein sawing the single ingot includes receiving the single ingot from a robot disposed in the transfer chamber, urging the single ingot against a layer of wires disposed across two wire guides, and moving the layer of wires relative to the single ingot, and transferring the sawed ingot from the wire sawing chamber to an output module.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.

Figure 1A is an isometric view of a wafer sawing system according to one embodiment described herein.

Figure 1B is an isometric view of a robotic device that may be used in the wafer sawing system according to one embodiment described herein.

Figure 2 is an isometric view of a wafer sawing system according to one embodiment described herein.

Figure 3A is a side view of a wafer sawing chamber that may be used in a wafer sawing system according to one embodiment described herein.

Figure 3B is an isometric view of an ingot disposed in the wafer sawing region of a wafer sawing chamber according to one embodiment described herein.

Figure 3C is a side view of a wafer sawing chamber that may be used in a wafer sawing system according to one embodiment described herein.

Figure 3D is a side view of a wafer sawing chamber that may be used in a wafer sawing system according to one embodiment described herein.

Figure 4 is a schematic view of a wafer sawing chamber that may be used in a wafer sawing system according to one embodiment described herein.

Figure 5 is a side view of a wire guide assembly used in a wafer sawing chamber according to one embodiment described herein.

Figure 6A is a side view of a wafer sawing chamber that may be used in a wafer sawing system according to one embodiment described herein.

Figure 6B is another side view of the wafer sawing chamber illustrated in Figure 6A according to one embodiment described herein.

Figure 7A is a side view of a wafer sawing chamber that may be used in a wafer sawing system according to one embodiment described herein.

Figure 7B is another side view of the wafer sawing chamber illustrated in Figure 7A according to one embodiment described herein.

For clarity, identical reference numerals have been used, where applicable, to designate identical elements that are common between figures. It is contemplated that features of one embodiment may be incorporated in other embodiments without further recitation.

### DETAILED DESCRIPTION

The present invention generally provides a wafer sawing system including a plurality of wire sawing chambers that each can independently saw an ingot to form thin substrates. The wafer sawing system can be used to form different types of substrates, or wafers, such as solar cell substrates, semiconductor substrates, or other useful substrates from a larger piece, such as an ingot, boule or block. In one configuration, the wafer sawing system is configured to accept a crystalline silicon (c-Si) ingot and perform all of the processing steps needed to form clean and dry substrates. For ease of discussion and to avoid confusion, the phrase ingot will be used herein to broadly signify a larger piece, or un-cut element, that is to be sawed in the wafer sawing system.

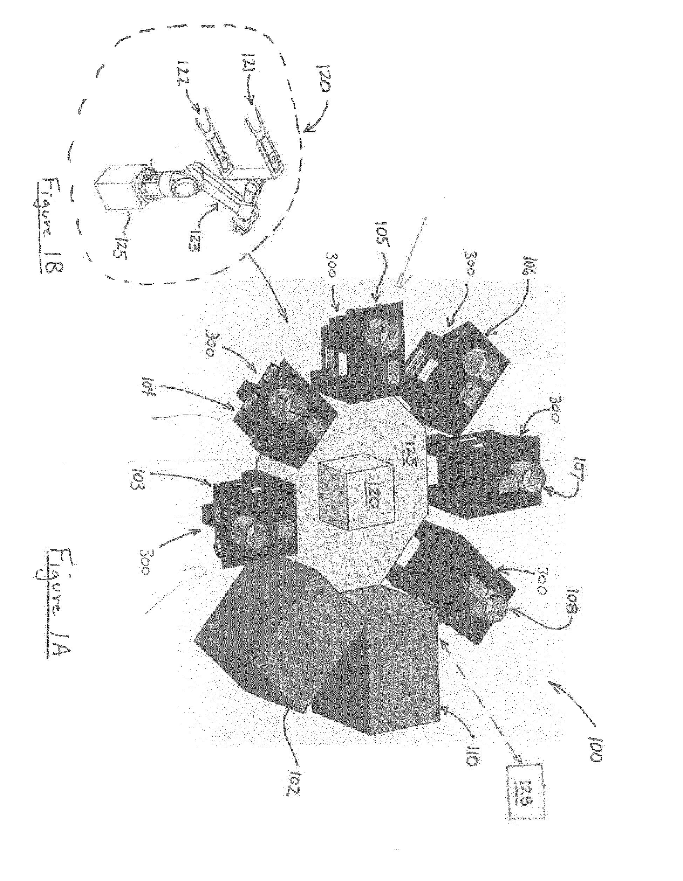

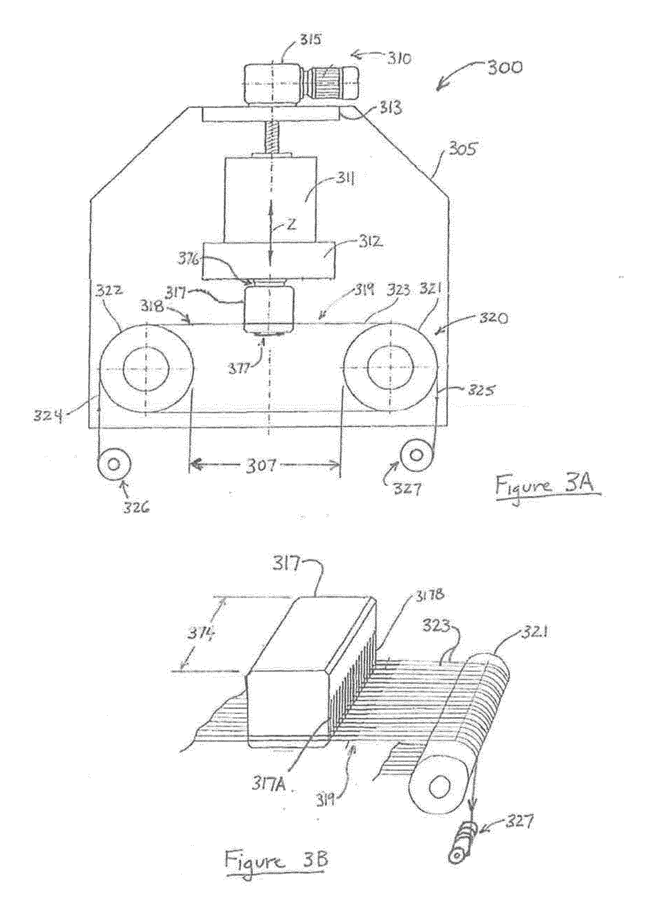

Figure 1A is an isometric view of wafer sawing system 100 that has a plurality of wire sawing chambers 300 disposed on and/or coupled to a central transfer chamber 125. In one example, for improved throughput and chamber uptime concerns, the wafer sawing system 100 has at least six wire sawing chambers 300 that can independently saw an ingot. However, fewer or greater numbers of wire sawing chambers 300 may be used. Various configurations of a wire sawing chamber 300 that may be used in a wafer sawing system 100 are illustrated and further discussed below in conjunction with Figures 3A-3D, 4, 6A-6B and 7A-7B. The wafer sawing system 100 generally includes an input module 102, a central transfer chamber 125, a central robot 120, an output module 110, a system controller 128 and a plurality of wire sawing chambers 300 that are disposed in the various processing positions 103-108 formed on the central transfer chamber 125. In one embodiment, the wire sawing chambers 300 are each mounted on or coupled to the central transfer chamber 125. The wire sawing chambers 300 are typically mounted on or coupled to the central transfer chamber 125 such that the wire sawing chambers 300 are each vibrationally isolated from each other and the central transfer chamber 125 to avoid vibrations created during sawing from affecting the wafer sawing process in one of the other adjacent chambers.

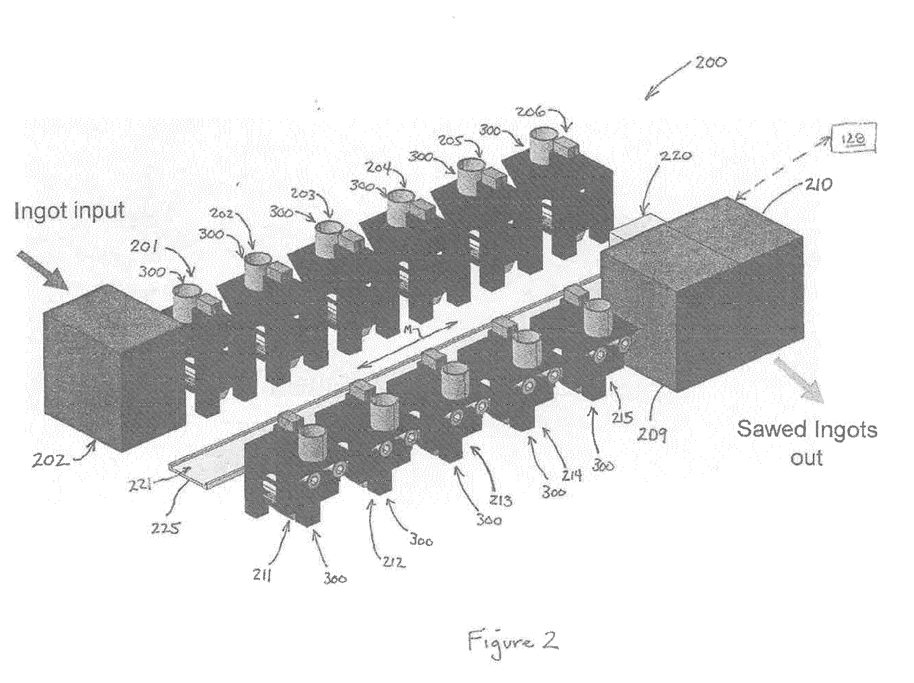

Figure 1B is an isometric view of a robotic device (e.g., central robot 120) that can be coupled to the central transfer chamber 125 to transfer un-processed and processed ingots from the various types of processing chambers disposed in the wafer sawing system 100. During processing, un-cut ingots are transferred from the input module 102 to one of the wire sawing chambers 300 through a transfer region by the central robot 120. Then after being sawed in a wire sawing chamber 300, the sawed ingots are transferred to the output module 110. In one embodiment, a washing station (not shown) (e.g., reference numeral 209 in Figure 2) is disposed in one of the processing positions 103-108, and is used to clean the slurry material from a sawed ingot before it is delivered to the output module 110 by the central robot 120.

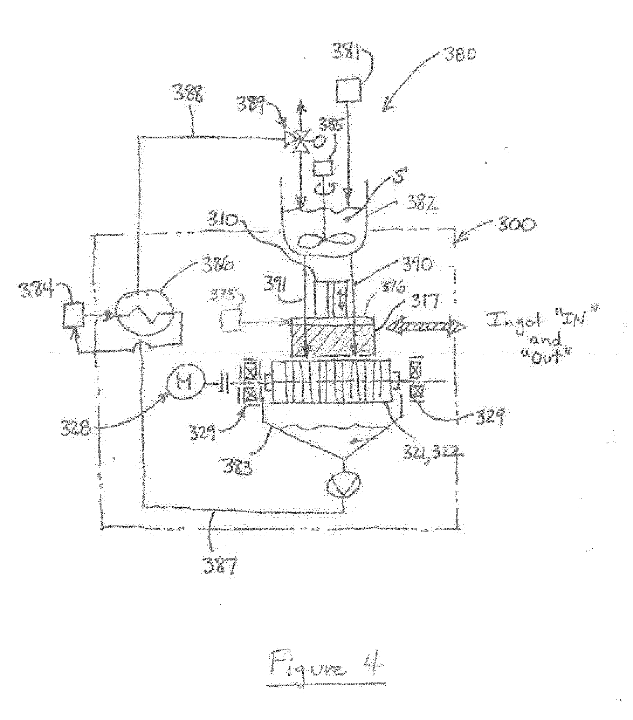

The central robot 120 generally includes a conventional robotic device, such as a SCARA robot or a six-axis robot as is shown in Figure 1B, that has at least one end-effector 121, 122 that is able to pick-up and transfer an ingot from one chamber to the next in the wafer sawing system 100. In one embodiment, the central robot 120 has at least two end-effectors 121 and 122 that can be used to transfer the ingots through the wafer sawing system 100. In this configuration, the first end-effector 121 can be used to receive un-cut ingots (e.g., clean and dry pieces) from the input module 102, and the second end-effector 122 can be used to transfer sawed ingots (e.g., wet, dirty and fragile elements) from the wire sawing chambers 300 to the output module 110. The second end-effector 122 may contain a supporting tray element (e.g., flexible brush like element (not shown)) that is coupled to the end-effector 122 to support the fragile cut wafers, or substrates, during the transferring process. In one embodiment, a portion of the end-effectors 121 and 122 are configured to engage with the mounting plate 376 (Figure 4), on which the ingot 317 is mounted, to ensure the reliable transfer of the un-cut and sawed ingot through the wafer sawing system 100.

The input module 102 generally includes one or more storage shelves (not shown) that are configured to receive an un-cut type of ingot 317 (Figures 3A and 4) that has been bonded to a mounting plate 376. In one embodiment, the mounting plate 376 includes a ceramic material that has a plurality of fluid channels (not shown) formed therein to allow a heat exchanging and/or rinsing fluid to flow therein during and/or after the wafer sawing process has been performed on the ingot 317.

The output module 110 generally includes one or more storage shelves (not shown) that are configured to receive an ingot 317 and mounting plate 376 after the wafer sawing process has been performed on the ingot 317. The output module 110 may also include a rinsing device (e.g., DI water delivery system) or rinsing station that is able to keep the sawed ingots wet so that the slurry used in the sawing process will not dry on the processed ingots. In one embodiment, the output module 110 may include a rinsing device/system that cleans the sawed ingots to remove any contamination found on the surface of the formed substrates.

In general, the system controller 128 is used to control one or more components and processes performed in a wafer sawing system. The system controller 128 is generally designed to facilitate the control and automation of the wafer sawing system and particularly includes a central processing unit (CPU) (not shown), memory (not shown), and support circuits (or I/O) (not shown). The CPU may be one of any form of computer processors that are used in industrial settings for controlling various system functions, substrate movement, chamber processes, process timing and support hardware (e.g., sensors, robots, motors, timing devices, etc.), and monitor the processes (e.g., chemical concentrations, processing variables, chamber process time, I/O signals, etc.). The memory is connected to the CPU, and may be one or more of a readily available memory, such as random access memory (RAM), read only memory (ROM), floppy disk, hard disk, or any other form of digital storage, local or remote. Software instructions and data can be coded and stored within the memory for instructing the CPU. The support circuits are also connected to the CPU for supporting the processor in a conventional manner. The support circuits may include cache, power supplies, clock circuits, input/output circuitry, subsystems, and the like. A program, or computer instructions, readable by the system controller 128 determines which tasks are performable on a substrate. Preferably, the program is software readable by the system controller 128 that includes code to perform tasks relating to monitoring, execution and control of the movement, support, and/or positioning of an ingot within the wafer sawing system, along with the various wafer sawing recipe tasks and various wafer sawing chamber process recipe steps being performed in each of the wire sawing chambers 300 in the wafer sawing system.

Figure 2 is an isometric view of linear type wafer sawing system 200 that has a plurality of wire sawing chambers 300 disposed on and/or coupled to a transfer chamber 225. In general, any number of wire sawing chambers 300 can be disposed on either side of a linear robot 220 to achieve a desired system throughput. In one example, for improved throughput and chamber availability concerns, the wafer sawing system 200 has at least six wire sawing chambers 300 disposed on one side, or evenly distributed on both sides, of the transfer chamber 225. However, fewer or greater numbers of wire sawing chambers 300 may be used. The wafer sawing system 200 generally includes an input module 202, a transfer chamber 225, a linear robot 220, an output module 210, a system controller 128 and a plurality of wire sawing chambers 300 that are disposed in the various processing positions 203-206 and 212- 215 formed on the transfer chamber 225. In one embodiment, the wire sawing chambers 300 are each mounted on or coupled to the transfer chamber 225. The wire sawing chambers 300 are typically mounted on or coupled to the transfer chamber 225 such that wire sawing chambers 300 are vibrationally isolated from each other and the transfer chamber 225, as discussed above. The various configurations of a wire sawing chamber 300 that may be used in a wafer sawing system 100 and/or 200 are illustrated and further discussed below in conjunction with Figures 3A-3D, 4, 6A-6B and 7A-7B. The input module 202 and output module 210 are generally similar to the input module 102 and the output module 110, respectively, which are discussed above, and thus are not discussed further herein.

The linear robot 220 is used to transfer un-cut ingots from the input module 202 to one of the wire sawing chambers 300, and then after performing the sawing process, the sawed ingots are transferred to the washing station 209 or the output module 210. In one embodiment, the washing station 209 is used to clean and dry the slurry material from the sawed ingot before it is delivered to the output module 210 by the linear robot 220. The robot 220 generally includes a conventional robotic device, such as a SCARA robot or a six-axis robot, that is configured to move along a rail 221 (i.e., direction "M" in Figure 2) that is disposed in a transfer region that spans the length of the wafer sawing system 200. In general, the linear robot 220 has at least one endeffector (not shown), such as end effectors 121, 122 discussed above, that are able to pick-up and transfer an ingot from one chamber to the next in the wafer sawing system 200.

Figure 3A is a side view of a wire sawing chamber 300 that may be used in a wafer sawing system, such as the wafer sawing systems 100 and 200, discussed above. Figure 3B is an isometric view of an ingot 317 that is partially sawed due to the various automated components in the wire sawing chamber 300 urging the ingot 317 against the layer 319 of wire(s) 323 disposed in the sawing region 318 of the wire sawing chamber 300. With reference to Figure 3A, the sawing chamber generally includes a frame 305, wire guide cylinders 321 and 322 that are mounted on the frame 305 with their rotational axes disposed parallel to each other, and an actuator assembly 310 used to urge an ingot 317 against the layer 319 of wire(s) 323. The wire 323 is received from a supply bobbin 326 and then wound about the wire guide cylinders 321, 322 to form at least one layer 319 of parallel wires in the sawing region 318. The wire 323 is then returned to a suitable receiving device, such as a receiving bobbin 327. At least one of the guide cylinders 321 or 322 are coupled to drive motor 328 (Figure 4) that is adapted to move the wire(s) 323 disposed in the sawing region 318 in single direction, or, preferably, in a reciprocating motion (e.g., forward a first distance and then back a second distance (e.g., first distance > second distance)). The guide cylinders 321 and 322 may be supported by one or more bearings 329 (Figure 4), which are coupled to a wire tensioning system (not shown) that is adapted to provide a desired tension to the wire(s) 323 by moving one guide cylinder relative to the other. During processing, the system controller 128 may monitor the drive motor 328's torque to determine the force applied to the ingot 317 by the actuator assembly 310.

In one embodiment, only a single ingot 317 is positioned and sawed at a time within each of the wire sawing chambers 300 disposed in a wafer sawing system 100, 200. It is believed that processing a single ingot using a single layer 319 of wires has significant advantage over conventional wire sawing systems that try to maximize ingot throughput by sawing multiple ingots at once using a relatively slow wire cutting speed (e.g., ingot movement speed 200-400 µm/min and wire speed of 15 m/s). While the "load", or length 374 (Figure 3B) of an ingot 317 in a single ingot wafer sawing chamber is proportionally less than number of ingots 317 that are processed in a conventional wafer sawing system, the throughput of a single ingot wafer sawing chamber 300 can be made equivalent to conventional wafer sawing chambers by increasing the wire speed by at least a proportional amount. In one example, a conventional wire sawing chamber is used to process four ingots at a time (e.g., typically two ingots on two separate wire layers) at a ingot movement speed of about 200 µm/min, whereas the inventive configuration described herein, is configured to saw a single ingot at an ingot movement speed of at least 800 µm/min, thus achieving a similar wafer sawing throughput. Sawing a single ingot at a time in a wafer sawing chamber 300 is advantageous for multiple reasons. First, sawing one ingot 317 at a time can greatly simplify the guide cylinder 321, 322 mounting, alignment and structural configuration, such as by using only two guide cylinders 321, 322 (Figure 3A) versus typically four guide cylinders having wires wound across all of the four guide cylinders as in a conventional wire sawing device. Second, the inertia of a two guide cylinder 321, 322 system is greatly reduced from a greater than two wire guide containing system, which can enable the use of reciprocating wire motion that has been proven to increase the wire life time (e.g., time before the wires need to be removed from the wire sawing process), and thus reduce chamber maintenance downtime. In one embodiment, the inertia of the wire guide cylinders 321, 322 is desirably reduced by using a low mass density material, such as a carbon filled reinforced polymer or other type of composite material. Third, the variation in wire parallelism, wire pitch (e.g., spacing between wires), and wire bow is greatly reduced during the wafer sawing process in a two guide cylinder wire sawing system, due to the ability to reduce the span of the layer of wire(s), or gap 307 (Figure 3A) between the wire guides 321, 322, since only a single ingot is being processed at a time. The reduced variation in wire parallelism, wire pitch and wire bow will improve the total thickness variation (TTV) of the wire sawing process, thus improving the sawing process yield and/or allowing thinner wafers to be reliably formed. Thinner sawed wafers are useful for forming the next generation of solar cells and semiconductor devices.

Accordingly, according to some embodiments, which can be combined with other embodiments described herein, the ingot length can be 310 mm to 370 mm, e.g. 330 mm to 350 mm. Thereby, a beneficial compromise between sawing speed, number of wafers, yield and complexity of the sawing device can be realized to improve the CoO.

In one embodiment, the single ingot 317 is mounted on a support table 312 by means of a temporary support, such as the mounting plate 376 (Figures 3A and 4). This support table 312 can be moved vertically in the Z-direction by use of the actuator assembly 310, which may include a column 311 and a motor 315, that is adapted to urge the ingot 317 against the single layer 319 of wire(s) 323 during the sawing process.

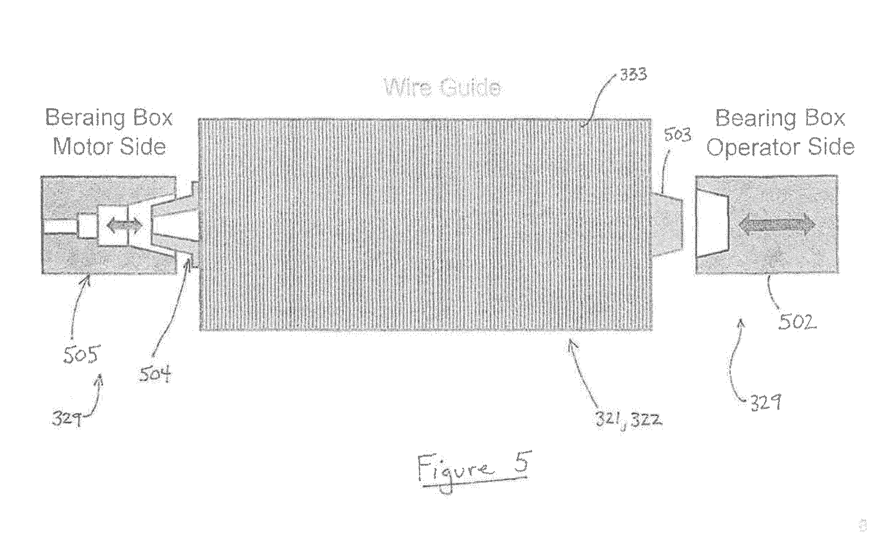

The periphery of the wire guide cylinders 321, 322 is engraved with grooves 333 (Figure 5), which define the pitch between adjacent wires of the layer 319 of wires, and hence the thickness of the sawed slices. These latter are separated from each other by slots or sawing gaps 317A (Figure 3B). According to some embodiments, which can be combined with other embodiments described herein, the grooves are configured to a result in a waver thickness of 170 µm or below, e.g. 140 µm to 170 µm, such as 160 µm. Thereby, the costs of ownership can be further reduced by increasing the number of wafers produced with one cut. Accordingly, also embodiments of methods may include: sawing wafers of 170 µm or below, e.g. 140 µm to 170 µm, such as 160 µm.

The wire 323 is stretched and both guided and tensioned by the wire guide cylinders 321, 322 so as to move with reciprocating or continuous single direction movement. This wire 323 may include a spring steel with a diameter included between 0.1 and 0.2 mm so as to saw ingots of hard material, or of more particular composition, such as silicon, ceramic, compounds of the elements of groups III-V and II-VI, GGG (gadolinium gallium garnet), sapphire, etc., in slices of desirably about 300 µms or less, or preferably for next generation substrates 180 µms or less in thickness. An abrasive agent is generally a commercial product, such as diamond, silicon carbide, alumina, or other useful material that is used to improve the ingot sawing process. The abrasive agent may be fixed to the wires 323, or be in a free form that is in suspension in a liquid (e.g., PEG), such as a slurry, which serves as a transport for the abrasive particles. To reduce the downtime of the wire sawing chamber 300, in some embodiments it is desirable to weld, or join, a new wire to the end of a nearly completely used wire 323 that is disposed on the supply bobbin 326, thus allowing the wire sawing chamber to continue to process ingots 317 without being taken down to replace the used wire 323.

The wire sawing chamber 300 is typically provided with a holding device 377 arranged so as to hold, in the course of sawing, the partially or entirely sawed slices 317B (e.g., unformed substrates) substantially parallel to each other, such that the width of the sawing gaps 317A are maintained substantially constant during sawing of the slices.

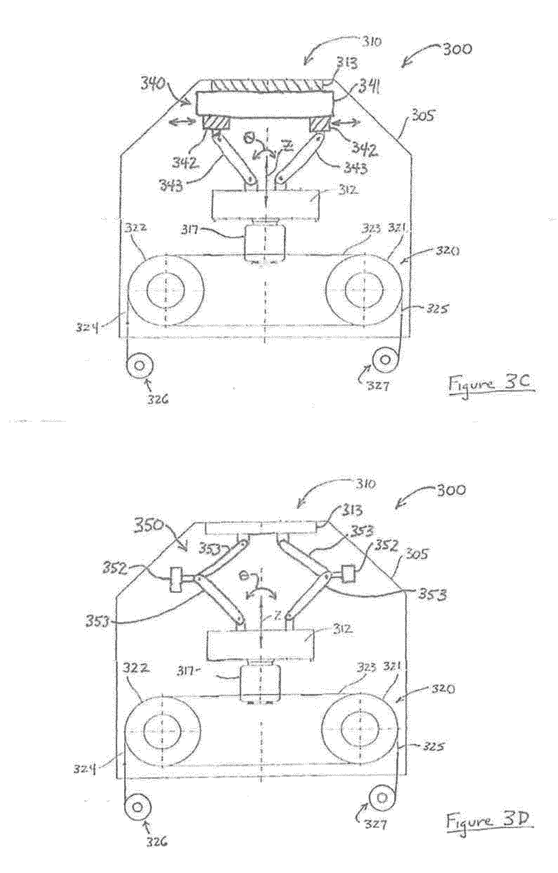

Figure 3C is a side view of a wire sawing chamber 300 that has an actuator assembly 310 that includes an ingot positioning system 340. The ingot positioning system 340 generally includes a rail 341 and one or more linear motors 342 (two shown) that are configured to each separately move along the rail 341 to cause the arms 343, support table 312 and ingot 317 to move relative to the layer 319 of wire(s) 323. In this configuration, the relative motion of the linear motors 342 to each other and to the rail 341 can be used to move the ingot 317 in the Z-direction and also provide a tilt to the ingot 317 relative to the layer 319 of wires 323. The ability to vary the angle of the ingot 317, or tilt of the ingot 317, relative to the wire(s) 323 during the initial stages of the sawing process can be important to allow the slots 317A to be evenly formed across the ingot 317, versus urging the full surface of the ingot against the wire(s) 323 at once, which can cause the wires to shift out of the grooves 333 formed on the wire guides 321, 322 and/or break.

Figure 3D is a side view of a wire sawing chamber 300 that has an actuator assembly 310 that includes an ingot positioning system 350. The ingot positioning system 350 generally includes two "two-bar linkages" of bars 353 that are coupled to a base plate 313, support table 312 and one or more actuators 352 that are configured to move each of the two-bar linkages separately. During processing the actuators 352 are configured to move the support table 312 and ingot 317 relative to the layer 319 of wire(s) 323. In this configuration, the relative motion of two-bar linkages due to the motion applied by each actuator 352 is used to move the ingot 317 in the Z-direction and also provide a tilt _ to the ingot 317 relative to the layer 319 of wire(s) 323, which can be important as discussed above.

Figure 4 is a side view of a wire sawing chamber 300 that has an automated slurry delivery system 380. The automated slurry delivery system 380 generally includes a slurry replenishment source 381, a slurry feed tank 382, slurry delivery lines 390, 391 that are configured to deliver slurry to the wires 323 and/or ingot 317, a slurry return tank 383, a slurry heat exchanging device 384 (e.g., fluid type heat exchanger) and a slurry pump 386 that moves the abrasive containing slurry from the slurry return tank 383 to the slurry feed tank 382 through a valve 389. In one embodiment, the slurry feed tank 382 includes a stirring mechanism 385 that is configured to stir the slurry "S". In one configuration of the wafer sawing system 100, 200, the slurry delivery system 380 is a central system that is configured to deliver a desired amount of slurry to the ingots 317 being sawed in each of the wire sawing chambers 300. In another configuration of the wafer sawing system 100, 200, a separate slurry delivery system 380 is disposed at each wire sawing chamber 300 to allow individual control of the slurry delivery to the ingots 317 during the sawing process.

In one embodiment of the wire sawing chamber 300, as briefly discussed above, a fluid delivery system 375 is configured to deliver a fluid, such as DI water, a coolant, or a gas to channels (not shown) formed in the mounting plate 376 to cool the ingot 317 during processing or rinse the slices (or substrates) after the wafer sawing process has been completed.

Figure 5 is side view of a wire guide 321, 322 that is configured to be rapidly replaced during maintenance activities performed on the wire sawing chamber 300. In one embodiment, the wire guide containing assembly includes a wire guide 321, 322, a bearing 502 that mates with a bearing surface 503 formed on the wire guide 321, 322 and a bearing 504 that mates with a bearing surface 504 formed on the wire guide 321, 322. Due to the position, shape and type of the bearings used on either end of the wire guide 321, 322, the wire guide can be rapidly replaced when it is worn out.

Accordingly, according to aspects of the present disclosure, the wafer sawing system as disclosed herein may include a clamping assembly for connecting to a cylindrical wire guide of a wire saw for cutting wafers. The clamping assembly may include a shaft-side connector adapted to connect to a shaft of a wire saw with the shaft having an axis of rotation. The shaft-side connector includes an outer surface which is normal to the axis and adapted to abut a complementary outer surface of a complementary connector of the wire guide, and a conical surface between the outer surface and the axis, the conical surface being disposed symmetrically about the axis, and adapted to abut a complementary surface of the wire guide.

It is also possible that the clamping assembly for connecting a cylindrical wire guide to a shaft of a wire saw includes an outer surface which is normal to the axis and adapted to abut a complementary outer surface of a complementary connector of the shaft, and a conical surface between the outer surface and the axis, the conical surface being disposed symmetrically about the axis, and adapted to abut a complementary surface of the complementary connector. The wire saw is adapted to cut wafers. The shaft has an axis of rotation.

According to embodiments, the outer surface of the clamping assembly is planar. In addition or alternatively, according to embodiments, the outer surface of the clamping assembly is adjacent to the conical surface. It may be annularly shaped.

It is possible that a portion of the outer surface is located at a distance of at least about 65%, 70%, 75% or 80% of the radial distance from the axis to a radially outer edge of the shaft-side connector. The outer surface may be annularly shaped; it is possible that the outer surface optionally includes 1, 2, 3, or 4 sections.

The conical surface of the shaft-side connector may include a deformable material. Generally and not limited to any embodiment, the conical surface may include 1, 2, 3, or 4 conical sections.

According to embodiments, the shaft-side connector of the clamping assembly is hollow. The shaft side connector may be female. The clamping assembly may include the shaft which is connected to the shaft side connector.

The clamping assembly may include a holding mechanism that is typically selected from a hydraulic system, a pneumatic system, a screw, and combinations thereof.

According to embodiments, the conical surface of the clamping assembly may be attached to the wire guide. The outer surface may be adjacent to the conical surface.

The cylindrical wire guide may include a carbon fiber reinforced polymer section.

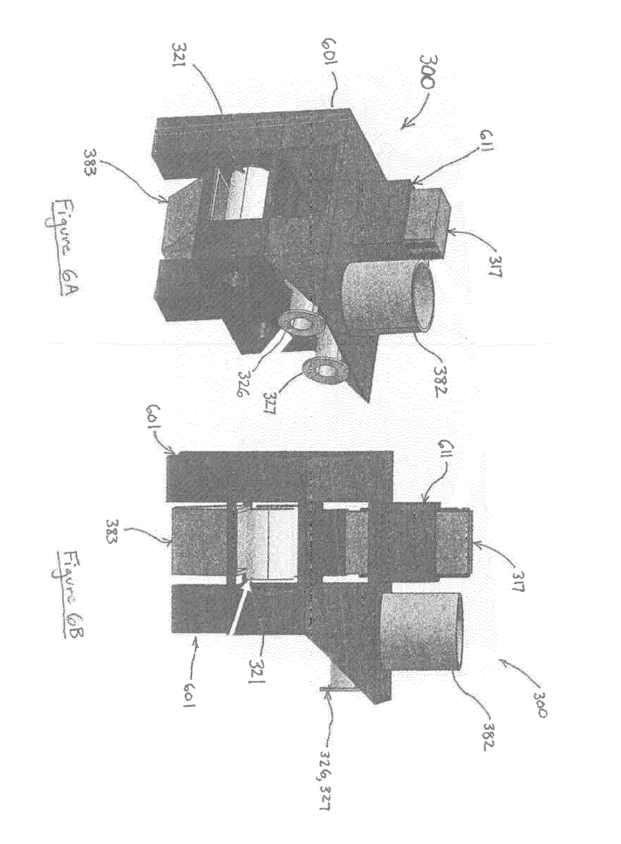

Figures 6A and 6B are side views of a wire sawing chamber 300 that may be used in a wafer sawing system 100, 200, discussed above. With reference to Figures 6A-6B, the wire sawing chamber 300 generally includes a frame 601, wire guide cylinders 321, 322 that are mounted on the frame 601, a supply bobbin 326, a receiving bobbin 327, an ingot supporting element 611 and other chamber and slurry components which are discussed above. In this configuration, the ingot supporting element 611 is configured to guide and support the ingot 317 as it is urged against the layer of wires 319 (Figure 3A).

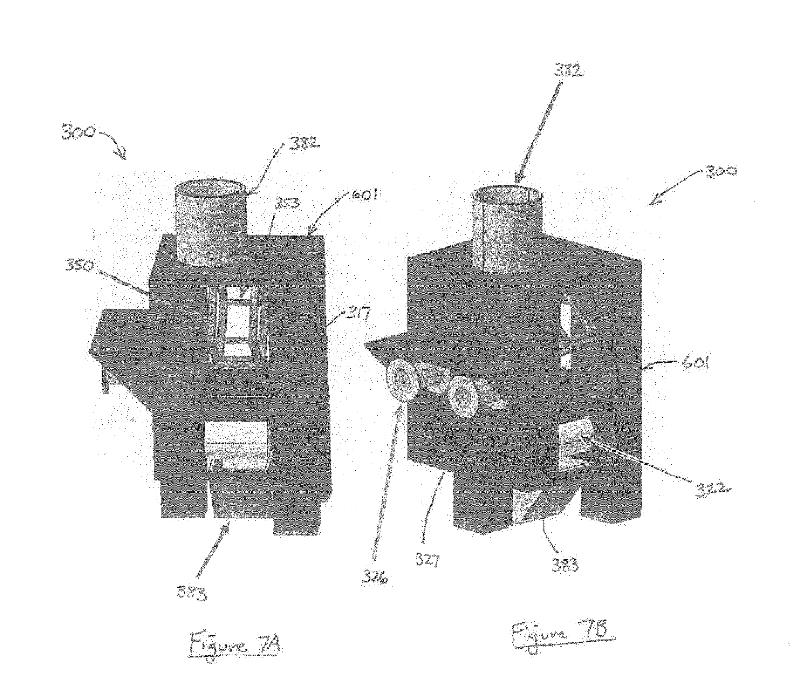

Figures 7A and 7B are side views of a wire sawing chamber 300 that may be used in a wafer sawing system, such as the wafer sawing systems 100 and 200, discussed above. With reference to Figures 7A-7B, the wire sawing chamber 300 generally includes a frame 601, wire guide cylinders 321, 322 that are mounted on the frame 601, a supply bobbin 326, a receiving bobbin 327, an ingot position system 350 and other chamber and slurry components discussed above. In this configuration, the ingot position system 350, which is discussed above in conjunction with Figure 3D, is configured to guide and support the ingot 317 as it is urged against the layer of wires 319 (Figure 3D). In one configuration, the slurry feed tank 382 is disposed over or above the ingot position system 350.

While the foregoing is directed to embodiments of the present invention, other and further embodiments of the invention may be devised without departing from the basic scope thereof, and the scope thereof is determined by the claims that follow.

## Claims

1. A wafer sawing system, comprising:
an ingot input module;
an ingot output module;
two or more wire sawing chambers that each comprise: two wire guide cylinders;
at least one wire disposed across both of the wire guide cylinders;
a support table that is configured to receive a single ingot;
and an ingot positioning system that is configured to urge the single ingot disposed on the support table against the at least one wire; and
a robot that is configured to transfer the single ingot between the ingot input module, at least one of the two or more wire sawing chambers and the ingot output chamber.

2. The wafer sawing system of claim 1, wherein the ingot input module, ingot output module and the two or more wire sawing chambers are transferrably coupled a transfer chamber, and wherein the robot is coupled to the transfer chamber.

3. The wafer sawing system of any of claims 1 to 2, further comprising a rinsing station.

4. The wafer sawing system of any of claims 1 to 3, wherein the length of the two wire guide cylinders is 310 mm to 370 mm.

5. The wafer sawing system according to any of claims 1 to 4, wherein the two or more sawing chambers are configured for sawing one ingot, particularly one ingot provided a load of 310 mm to 370 mm length, at a time.

6. The wafer sawing system according to any of the preceding claims, further comprising a clamping assembly for connecting to a cylindrical wire guide of a wire saw for cutting wafers, the clamping assembly comprising:
a shaft-side connector, adapted to connect to a shaft of a wire saw, the shaft having an axis of rotation , wherein
the shaft-side connector includes:
an outer surface which is normal to the axis and adapted to abut a complementary outer surface of a complementary connector of the wire guide, and
a conical surface between the outer surface and the axis, the conical surface being disposed symmetrically about the axis, and adapted to abut a complementary surface of the wire guide.

7. The wafer sawing system according to any of claims 1-5, further comprising a clamping assembly for connecting a cylindrical wire guide to a shaft of a wire saw, the wire saw adapted to cut wafers, wherein the shaft has an axis of rotation, the clamping assembly comprising:
an outer surface which is normal to the axis and adapted to abut a complementary outer surface of a complementary connector of the shaft, and a conical surface between the outer surface and the axis, the conical surface being disposed symmetrically about the axis, and adapted to abut a complementary surface of the complementary connector.

8. A method of sawing an ingot in a wafer sawing system, comprising:
transferring a single ingot from an input module to one of a plurality of wire sawing chambers that are positioned relative to a transferring region of a transfer chamber;
sawing the single ingot in the wire sawing chamber, wherein sawing the single ingot comprises: receiving the single ingot from a robot disposed in the transfer chamber;
urging the single ingot against a layer of wires disposed across two wire guides;
and moving the layer of wires relative to the single ingot; and
transferring the sawed ingot from the wire sawing chamber to an output module.

9. The method of claim 8, wherein moving the layer of wires comprises moving the layer of wires in a reciprocating motion.

10. The method of any of claims 8 to 9, wherein the moving of the layer is conducted at a speed of at least 400 µm/min or 800 µm/min.

11. The method of any of claims 8 to 10, wherein the sawing is done at a wire speed of 20 m/s and above.
